# EUROPEAN PATENT APPLICATION

(11) **EP 2 366 510 A1**
(43) Date of publication of application: **21.09.2011**
(21) Application number: 10425074.1
(22) Date of filing: 18.03.2010
(51) Int. Cl.: B26D 7/00, B26D 7/02, B26B 29/06, G01N 1/06

(54) **Holding template for fresh large biospecimens**

(71) Applicant: Milestone S.r.l., 24010 Sorisole (BG) (IT)
(72) Inventor: Visinoni, Francesco, 24030 Mozzo (BG) (IT); Minuti, Matteo, 24053 Brignano Gera d'Adda (BG) (IT)
(74) Representative: Busse-Kopitzke, Carola

(57) **Abstract**

The present invention discloses a holding template 100 and a high-precision slicer. The holding template 100 is constructed by mounting a cage 3 onto a base plate 1, whereby only side portions 6 of the cage 3 are let into elongate openings 5 of the base plate 1. Biospecimens 20 can be pinned beneath the cage on the base plate 1 by means of the weight of the cage 3. The base plate 1 is mounted onto stilts 1b to ensure a stable and horizontal set up of the holding template 100. A plurality of slits 4, each extending along the side portions 6 and a top portion 11 of the cage 3, are provided to create a cutting template, i.e. guidance for a knife 13 to cut biospecimen 20 like organs, brain, prostrate or female breasts into pieces of well-defined thickness and orientation. The high-precision slicer is composed of a holding template 100 and a special knife 13.

## Description

The present invention discloses a holding template for fresh large biospecimens, especially for organs, like prostrate, brain, breast, kidney etc.. The present invention further discloses a high-precision slicer for fresh large biospecimens.

Many medical treatments or examinations, especially in the histopathology field, require cutting fresh large biospecimens, for example brain, kidney, prostrate or female breasts, into smaller processing suitable pieces. It is desired that the biospecimens are cut into pieces of well-defined thickness and well-defined orientation, for example to compare these real, mechanical cuts with virtual cuts generated for example through computer tomography. To cut the biospecimens in fresh conditions is required for molecular biology.

Fresh large biospecimens have a very soft and often slippery consistency, so that in fresh form they are very difficult to cut. Conventionally, fresh biospecimens are cut by hand with a mechanical cutting device like a knife or scalpel, or are cut with a rotary wheel slicer. However, due to the soft and slippery consistency, the biospecimens cannot be cut precisely by the mentioned devices without prior preparation. Therefore, to gain consistency they are for example frozen, fixed in formalin, or impregnated with wax. However, the cutting of the biospecimens cannot start before 2 to 3 days after the beginning of the preparation. Thus, necessary examinations are delayed, and a diagnosis might take much longer. Moreover, due to the preparation of the biospecimens, important biological information can be lost. For example deoxyribonucleic acid (DNA) is degraded by formalin. Therefore, for examinations concerning the DNA, a fixation with formalin is not recommended..

In view of the above-mentioned disadvantages, the present invention aims to provide a device and a method, which enable a user to cut fresh large biospecimens into smaller pieces of well-defined thickness and well-defined orientation.

The above-mentioned disadvantages are solved by the present invention with a holding template and a high-precision slicer.

In a first aspect, the present invention discloses a holding template for fresh large biospecimens, comprising a base plate standing on a plurality of stilts, the base plate being provided with at least two parallel elongate openings. The holding template further comprises a cage comprising at least two opposite side portions and a top portion, being removably mounted onto the base plate such that the two side portions are let into the elongate openings, and the cage being adapted to hold a biospecimen beneath, when mounted onto the base plate, wherein the cage is provided with a plurality of parallel slits, each extending along the side portions and the top portion. The holding template provides a solution to cut pieces with well-defined thickness and orientation out of fresh biospecimens. By mounting the cage onto the base plate as described above, the biospecimens are pinned beneath the cage, and are held in a tight and secure position. Therefore, during the cutting process the orientation of the biospecimens does not change, and all pieces will have the same orientation. With a knife, which the user inserts into the parallel slits of the cage, pieces of well-defined thickness can be cut out of the fresh biospecimens. The thickness of the pieces depends on which slits the user chooses, for example adjacent slits or every second slit. Since the cage is removably mounted to the base plate such that its side portions are inserted into the openings of the base plate, the cage is pushed down by its own weight onto the biospecimens. Therefore, biospecimens of different height and size can be held down by the cage, and can consequently be precisely cut. Different cages with a different arrangement of slits could be manufactured, and could be used for different thicknesses or orientations of the biospecimen pieces. For cutting the fresh biospecimens with the holding template, no preparation has to be carried out in advance. Thus, an examination can be performed much faster, and no biological information is destroyed in the preparation process.

Preferably, the base plate further comprises at least two vertically projecting posts, the cage further comprises at least two holes on the top portion, and the cage is mounted onto the base plate such that the posts pass through the holes.

Thereby, the stability of the cage mounted to the base plate is improved, and less movement can occur during the cutting of biospecimens.

Preferably, collar clamps with screw knob are provided with the holding template, which are adapted to be fixed on the posts above the holes.

The collar clamps with screw knob prevent the cage to be lifted with respect to the base plate, during the cutting of the biospecimens.

Preferably, the cage has a curved form, wherein a first curvature is at the transition from the side portions to the top portion, and optionally the top portion has a second curvature.

Due to the curved form of the cage, an optimal matching of the shapes of the cage and the biospecimens to be cut can be achieved. Thereby, the stability is increased, and a cutting of the biospecimens with a well-defined thickness and a well-defined orientation can be carried out easier.

Preferably, the cage is made of stainless steel, and the base plate is made of polyethylene, polypropylene, polytetrafluoroethylene, other polymers, or any combination thereof.

Steel provides a high enough weight of the cage, in order to securely pin biospecimens underneath the cage.

Preferably, the slits have a distance to each other, which is in a range of about 3 mm to about 6 mm, preferably about 5 mm, and the slits have a width, which is in a range of about 0,5 mm to about 2 mm.

By choosing the above-mentioned distance between the slits, thin biospecimen pieces can be cut. Furthermore, many slits can be provided to the cage, whereby the choice of the thickness of cut biospecimen pieces increases. The above-mentioned width is perfect for the use of a thin and sharp knife, and guarantees that there is not too much margin between the knife and the slits, which would cause imprecise cuts. Preferably, two fixtures are provided, adapted to be inserted into two of the plurality of slits, in order to fix biospecimens from both sides.

Because biospecimens are now pinned by the cage from above, held in place by the side portions from front and back, and are fixed from both sides (left and right) by the fixtures, the biospecimens can maintain a very well-defined position during the cutting. This guarantees that the desired thickness of the pieces is actually achieved, and that the cuts are clean and precise.

Preferably, the holding template further comprises a support tray made of polyethylene, polypropylene, or polytetrafluoroethylene with different width to fit the cages of different side dimensions, and a support plate which is adapted to fit into the cage onto the base plate, and which is preferably made of expanded polystyrene foam or other similar material.

The support plate is used to support the biospecimens, which are to be cut. During the cutting process fluids will be collected by the support plate, which reduces necessary cleaning efforts afterwards. Furthermore, the biospecimens are additionally held by the friction force, which the support plate provides from beneath, therefore do not tend to slide, and thus can be cut more precisely. Furthermore, since the knife penetrates the support plate a little bit with each cut, a complete cutting of the biospecimens is possible and much easier.

Preferably, the top portion comprises a vertical upper part, into which the slits extend, wherein the upper part of the top portion is provided with a handle.

By means of the handle the cage can be easily removed from the base plate, and can be easily transported. The slits in the vertical upper part ensure that a knife, which is inserted into one of the slits, follows the slit downwards, and therefore enters slits exactly opposite to each other on the first side portion and the second side portion of the cage. The knife is prevented from passing through slits, which are not opposite to each other on the opposite side portions of the cage, reducing danger of a crooked cutting.

Preferably, each slit comprises a broadening at its end located in the upper part of the top portion, wherein the plurality of broadenings is offset to one another in respect to the extension direction of the slits.

Due to the broadening, a knife can be more easily inserted into the slits. The arrangement, in which the slits are offset to one another, supports this advantage even further, and enables the user to easier control, which thickness the pieces of the biospecimens should have. The slits are also sequentially numbered for easy identification in the slicing process.

In a second aspect, the present invention discloses a high-precision slicer for fresh large biospecimens comprising a holding template according to the first aspect of the present invention, and a special knife. The knife is designed to fit into the slits, to be guided by the slits for slicing the biospecimens, is longer than the distance between the side portions of the cage, and has a preferred height of about 10 mm to 25 mm, more preferably about 18 mm.

A knife with the above-designed properties fits the holding template perfectly, and is best suited to carry out precise cutting. It fits the slits exactly, so that no margin causes the knife to tilt or move during the cutting process. It is long enough to pass through the slits on the front (first) side portion and the back (second) side portion of the cage. The height of the knife fits preferably to the height of the broadenings, so that the knife can be easily inserted.

The present invention will be described in more detail below, in reference to the attached drawings.
Fig. 1 shows a holding template according to the first aspect of the present invention.
Fig. 2 shows a holding template and a high-precision slicer, respectively, according to the first and second aspect of the present invention.
Fig. 3 shows a holding template and a high-precision slicer, respectively, according to the first and second aspect of the present invention from a side view.
Fig. 4 shows a holding template and a high-precision slicer, respectively, according to the first and second aspect of the present invention from a side view.

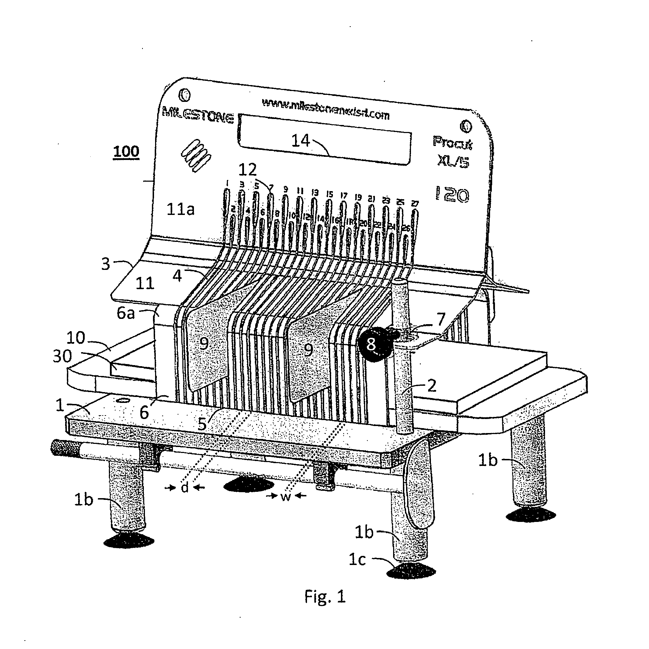

Fig. 1 shows a holding template 100 for large fresh biospecimens 20 according to the first aspect of the present invention. The holding template 100 comprises a base plate 1 standing on a plurality of stilts 1b. In fig. 1 four stilts 1b are indicated, however, also three or five or more stilts 1b can be used to stabilize the holding template 100. The stilts 1b in fig. 1 are exemplary cylindrical legs, which can be provided with special knobs 1c on their bottom end, to buffer and stabilize the holding template 100. The knobs can be made of rubber or another soft material, which is flexible and compensates movements of the holding template 100 during its use. The stilts 1b can be extendable to compensate for unevenness of the surface, on which the holding template 100 is set up. A horizontal and stable set up of the holding template 100 helps to provide better results in the later cutting process of fresh biospecimens 20 as will be explained below. The stilts 1b can be removably attached to the base plate 1, so that they can be taken off for easier storage, when the holding template 100 is not used.

The base plate 1 is preferably made of polyethylene, polypropylene, polytetrafluoroethlyene, which are advantageous to the holding template 100 in many ways. They are resistant against many chemicals, and thus shows good durability and has a long lifetime. The base plate 1 is further provided with at least two parallel elongate openings 5. The parallel elongate openings 5 are long and narrow slits, which are cut into the base plate 1 for example with a milling machine during the manufacturing process. However, other means can be employed to create the elongate opening 5 in the base plate 1.

The holding template 100 further comprises a cage 3 for holding biospecimens 20 beneath. The cage 3 comprises at least two opposite side portions 6. Each side portion 6 is designed to fit exactly into one of the at least two elongate openings 5 on the base plate 1. Thus, when the cage 3 is removably mounted onto the base plate 1, both side portions 6 are let into elongate openings 5, and slide downwards due to the weight of the cage 3, until the cage 3 touches and pins the biospecimen 20 beneath its top portion 11, which connects the two side portions 6, and further sliding is stopped. To hold the biospecimens 20 securely in place, a certain weight for the cage 3 is required, and therefore the cage 3 is preferably made of steel. Preferably the cage 3 is made of stainless steel to guarantee a longer lifetime and easy decontamination. However, other materials, which have sufficient weight and similar properties concerning durability, can be used.

For further securing the cage 3 to the base plate 1, the base plate 1 can comprise at least two vertically projecting posts 2. Additionally, the top portion 11 of the cage comprises at least two holes 7, which have a diameter that fits exactly the diameter of the cylindrical post 2. Of course also other non-cylindrical shapes can be used, as long as the posts 2 and the holes 7 match each other, so as to avoid margin and accordingly movement. When the cage 3 is mounted removably onto the base plate 1, the posts 2 pass through the holes 7, and provide the cage 3 with additional stability in respect to the base plate 1. Collar clamps with screw knob 8 can be additionally used to prevent the cage 3 to be lifted with respect to the base plate 1 during usage of the holding plate 100. Therefore, the collar clamps with screw knob are attached to the posts 2 at a portion of the posts 2, which is above the cage 3 and the holes 7, i.e. the portion which passes through the holes 7. Thereby, a vertical movement of the cage 3 in respect to the base plate 1 will be prevented.

If more than two elongate openings 5 are fabricated on the base plate 1, cages 3 of different widths, meaning different distances between the two side portions 6, can be used. The cage 3 is provided with a plurality of parallel slits 4, each extending along the side portions 6 and the top portion 11. When the cage 3 is holding biospecimens 20 beneath, the slits 4 can be used as a template to cut the biospecimens 20 into pieces with a well-defined width and a well-defined orientation. Depending on the distance d between the slits 4 and the width w of each slit 4, differently sized pieces can be achieved. Preferably, for the distance d between the slits 4, a range of about 3 mm to 6 mm is chosen. More preferably the distance d between the slits is about 5 mm. These widths allow a sharp and thin knife to be inserted into the slits 4, which can cut the biospecimens 20 in well-defined pieces, and leaves only little sideward margin when inserted into the slits 4. That means the knife is stably guided by the slits 4, and does not tilt and move so that the pieces can be cut precisely. The width w is preferably chosen in a range of about 0,5 mm to about 1 mm. The above combination of width w and distance d can be fabricated with high-precision into a stainless steel cage 3, and thin pieces of biospecimen 20 can be cut.

If thicker pieces are required, not every slit 4 has to be used as a template, but only every second or more slit 4 can be used to increase the thickness. Different cages 3 with different values for the width w and the distance d of the slits 4 can be used for different purposes and/or different biospecimens 20, respectively. Also different orientations of slits 4 on the cage 3 can be imagined, for example slits 4 running tilted to the surface of the side portions 6 and top portions 11, or slits 4 tilted to each other. Different cages 3 can have different distances between the side portions 6, and can be inserted into different elongate openings 5 on the base plate 1.

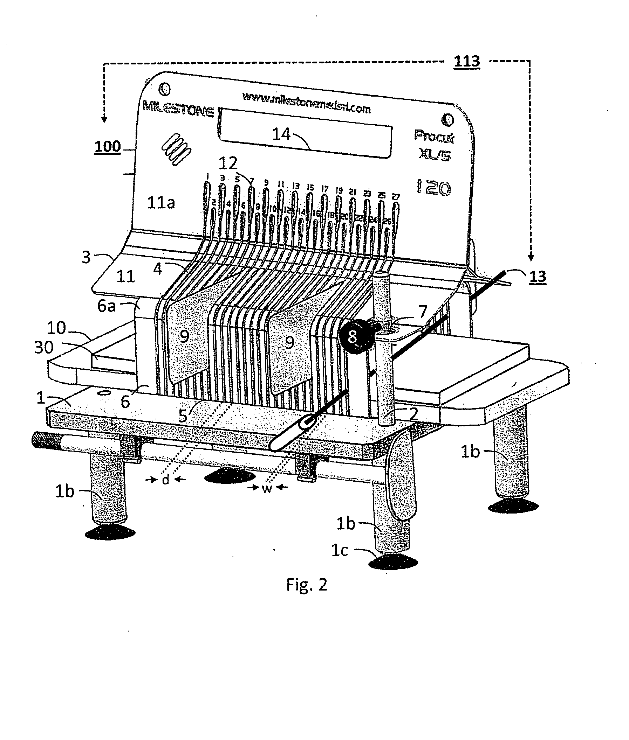

Fig. 2 shows a holding template 100, in combination with a knife 13, thus constituting a high-precision slicer 113 for fresh large biospecimens 20 according to a second aspect of the present invention. The knife 13 is especially designed to exactly fit the width w of the slits 4, and is guided by the slits 4 for slicing biospecimens 20, which are pinned beneath the cage 3. The knife 13 is constructed to be much longer than wide, so that it passes through the slits 4 at the front (first) side portion 6 and the back (second) side portion 6, and is thin and sharp, and easily cuts through the biospecimens 20. The preferred height of the knife 13 is 10 mm to 25mm, more preferably about 18 mm. When not in use, attachment means for the knife 13 can be provided on the holding template 100, in order to store it securely.

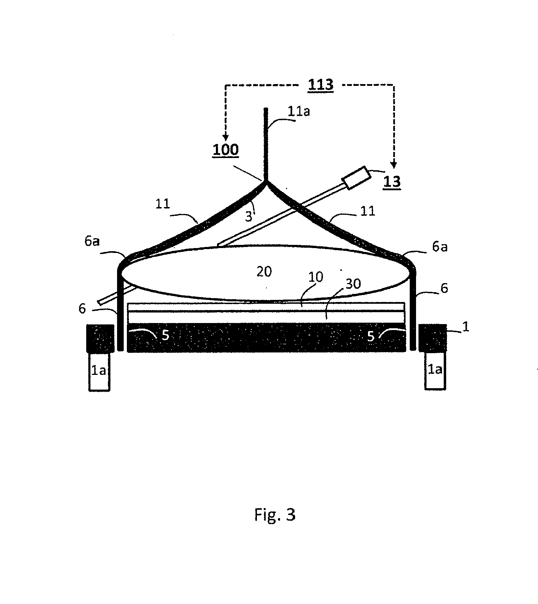

Fig. 3 shows a side view of the holding template 100, wherein is illustrated how the cage 3 pins the biospecimens 20 beneath. The base plate 1 and the elongate openings 5 are indicated, into which the side portions 6 of the cage 3 are inserted and are pushed down by the weight of the cage 3, until the cage 3 comes to rest on the biospecimens 20. All drawings and figures are to be understood only as exemplary and not exclusive illustrations. Of course, in fig. 3 the complete top portion 11 could be in contact with the biospecimen, whose shape can also adapt to the curvature of the top portion 11. Moreover, the biospecimen does not necessarily have to touch both side portions 6 as illustrated in fig. 3, but can also be smaller and just be in contact with the top portion 11 or one of the side portions 6. The holding template 100 preferably further comprises a support tray 10, which is adapted to fit into the cage 3, and to be mounted onto the base plate 1 beneath the biospecimens 20. The support tray 10 is preferably made of polyethylene, polypropylene, polytetrafluoroethylene. An expanded polystyrene foam support plate 30 is placed on top of the support tray 10. Placing the support plate 30 beneath the biospecimens 20 has many advantages. First of all, the support plate 30 collects fluids, which are created when biospecimens 20 are cut. The support tray 10 can be removed after the cutting process, and can be easily cleaned. No fluids leak out of the holding template 100 during its use, which reduces the cleaning effort afterwards. Furthermore, the support plate 30 has a high friction coefficient, and thus holds the biospecimens 20 in place from below. Sliding movement of the biospecimens 20 during the cutting process is suppressed, and therefore the cuts can be carried out with higher precision.

Moreover, since expanded polystyrene foam is a comparably soft material, the knife 13 enters and penetrates the support plate 30 every time a cut is performed, and thus a complete cutting of the biospecimens 20 is supported. The support plate 30 can be easily exchanged for another one, for example if worn out. Since support plates 30 are easy and cheap to manufacture only small additional costs are needed for multiple support plates 30.

As can be seen from figs. 1 and 3, the cage 3 preferably has a curved form. A first curvature can be provided at the transition 6a from both side portions 6 to the top portion 11. Optionally, the top portion 11 has a second curvature, preferably a concave curvature, while the transition 6a has a convex curvature. However, the invention is not restricted thereto. Thereby, the cage 3 can be better adapted to the shape of biospecimens 20, and the biospecimens 20 can be more tightly held during the cutting process. As can be seen from fig. 3, biospecimens have a soft and usually round shape, which automatically adapts to the curvatures of the transitions 6a and the top portion 11. The invention is however not limited to the above case. The transitions 6a and 6b, can be curved (convex and/or concave), angled, or rectangular, and also the top portion 11 can be straight, i.e. without curvature, and/or can have convex and/or concave curvature, or comprise of one or more angles.

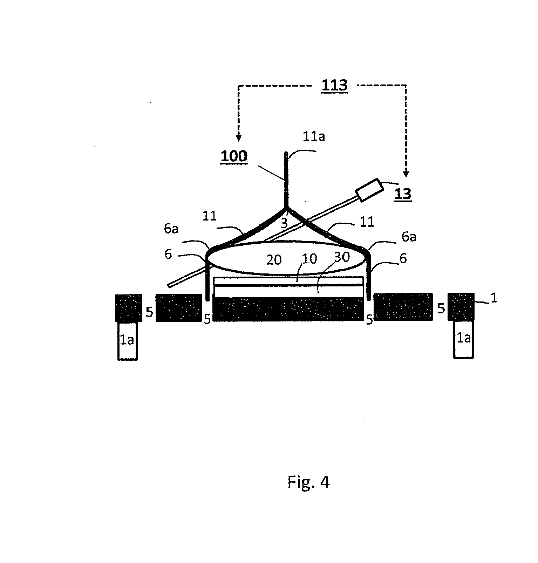

In fig. 4 is shown a side view of the holding template 100, which is provided with more than two elongate openings 5 on its base plate 1. Compared to the cage 3, which is mounted to the base plate 1 in fig. 3, the cage 3 of fig. 4 is narrower and its side portions 6 are less far apart. The side portions 6 are fit into the innermost two elongate openings 5, whereas the cage 3 in fig. 3 is fit into the outermost two elongate openings 5 with its side portion 6. In such a way, different cages 3 with, for example, differently arranged or designed slits 4 can be used. Also for different kinds of biospecimens 20, differently sized cages 3 are preferable. For differently sized cages 3 also differently designed support trays 10 have to be provided, as well as support plates 30.

In order to secure and to fix biospecimens 20 to be cut even more beneath the cage 3 during the cutting process, at least two fixtures 9 as shown in figs 1 and 2 are preferably used. The fixtures 9 are adapted to be inserted into two of the plurality of slits 4 of the side portion 6 and the top portion 11 of the cage 3. Two fixtures 9 are indicated in figs. 1 and 2. The fixtures 9 can be rectangular plates, which have a thickness exactly matching the slits 4. For cages 3 with different slits 4, different fixtures 9 can be fabricated. The material of the plates can be stainless steel. The fixtures 9 are used to fix biospecimens 20 in two directions, in figs. 1 and 2 from the left and the right side. Then, the biospecimens 20 are secured from the top by the top portion 11 of the cage 3, which is pushing down with the weight of the cage 3, from the front and the back by the side portions 6 of the cage 3, and from the left and the right side by the fixtures 9. Of course, a different orientation can be used, so that the side portions 6 support the biospecimens 20 from the left and right, while the fixtures 9, for example, hold the biospecimens 20 from the front and back. The mounting of the cage 3 is not specified to a certain orientation on the base plate 1. Consequently, also the openings 5 can be provided in different orientation or position on the base plate 1.

During the cutting process a further fixture 9 or more fixtures 9 can be used to provide additional fixing of the biospecimens 20 after a certain amount of cuts. Especially if very wide biospecimens 20 are used, more than two fixtures 9 could be advantageous to provide better stability of the biospecimen 20 pieces during the cutting process. With more than two fixtures 9 also more than one biospecimen 20 can be held in place at the same time, provided that the height and width of the biospecimens 20 is similar, so that they both fit into the same cage. Also more than one knife 13 can be used to cut the biospecimen 20. If more knives 13 are used, they can be left inside the biospecimen 20 after a cut is performed, and function in a similar way as the fixtures 9 described above, giving more stability to the biospecimen 20. The cutting of the biospecimen can then be continued with another knife 13.

As can be seen from fig. 1, the top portion 11 of the cage 3 of the holding template 100 preferably comprises additionally a vertical upper part 11 a, to which the slits 4 of the side portions 6 and the top portion 11 extend. Since the slits 4, which extend along the side portions 6 and the top portion 11, consequently merge in the vertical upper part 11 a, only a single slit can be chosen to insert the knife 13, and when then the knife 13 is guided downwards to the biospecimen 20, the knife 13 slides along opposite slits 4 on the front side portion 6 and back side portion 6. It is guaranteed that the knife 13 is inserted into exactly opposite slits 4, due to the linear guiding of the slits from the vertical upper part 11 a of the top portion 11. Thus, tilted cutting of the biospecimens 20 is prevented. The parallelity of the cuts is defined by the parallelity of the slits 4.

In order to facilitate the inserting of the knife 13 into the slits 4 even more, the slits 4 extending into the upper part 11 a of the top portion 11 can be provided with broadenings 12 at their ends. Since the slits 4 are designed to match the width of the knife 13, in order to reduce horizontal movement of the knife 4 during the cutting process, it is difficult to insert the knife into the slits 4. However, it is easy to insert the knife into the broadenings 12, and then to guide the knife 13 downwards toward the biospecimens 20. To simplify the choice of the slits 4, the broadenings 12 are offset to one another in respect to the extension direction of the slits 4. This means that two adjacent slits 4, and respectively two adjacent broadenings 12, are never disposed at the same position in respect to their height on the upper part 11a of the top portion 11. As indicated in fig. 1, every second broadening 12 can be disposed on the same position in respect to height. However, also more than two height positions can be used for broadenings 12 in the upper part 11a of the top portion 11, and can be varied for example for every third or more slit 4. The user can thus easily decide, in which slit 4 he wants to insert the knife 13. For example, for very thin cuts of biospecimen 20, the user inserts the knife into the first type of broadenings for the first cut, then the second type of broadenings for the second, and then the third type of broadenings for the third cut, in the case that three different height positions are used for the broadenings 12. If thicker pieces of biospecimen 20 are desired, the user, for example, inserts the knife only into the broadenings of the third type for each cut. Thereby, without having to think about the correct slits 4, pieces of different thickness can be cut with the holding template 100 or the high-precision slicer 113, respectively.

Finally, the upper part 11 a of the top portion 11 is provided with a handle 14. The handle 14 can simply be fabricated by cutting out a piece of the upper part 11a of the top portion 11 of the cage 3. By means of the handle 14, the cage 3 can be lifted off the base plate 1, when the holding template 100 is to be dissembled. The handle 14 can be additionally rounded or can be provided with a soft material at its top part, where the user grabs for the handle 14. Thereby, the lifting of the cage 3 is more comfortable for the user. The handle 14 is not limited in its shape or its size, and it is not limited to be a cut out portion of the upper part 11a of the cage 3. Also an external handle 14 can be attached to the cage 3, especially if no upper part 11a, standing vertical on the upper portion 11, is present.

In summary, a holding template 100 and a high-precision slicer 113 are disclosed by the present invention. By mounting a cage 3 onto a base plate 1, whereby only at least two side portions 6 of the cage 3 are let into at least two elongate openings 5 of the base plate 1, biospecimens 20 can be pinned beneath the cage 3 on the base plate 1. The base plate 1 is mounted on stilts 1b to ensure a stable and horizontal set up of the holding template 100. The plurality of slits 4, each extending along the side portions 6 and a top portion 11 of the cage 3, are provided to create a template, i.e. guidance for a knife 13 to cut biospecimens 20 into pieces of well-defined thickness and orientation. A high-precision slicer 113 is composed of a holding template 100 and a specially designed knife 13. Various biospecimens 20, like organs, brain, prostrate or female breasts can be cut precisely, easily and with well-defined proportions by use of the present invention.

## Claims

1. Holding template (100) for fresh large biospecimens (20), comprising a base plate (1) standing on a plurality of stilts (1b), the base plate (1) being provided with at least two parallel elongate openings (5);
a cage (3) comprising at least two opposite side portions (6) and a top portion (11), being removably mounted onto the base plate (1) such that the two side portions (6) are let into the elongate openings (5), and the cage (3) being adapted to hold a biospecimen (20) beneath, when mounted onto the base plate (1);
wherein the cage (3) is provided with a plurality of parallel slits (4), each extending along the side portions (6) and the top portion (11).

2. Holding template (100) according to claim 1, wherein
the base plate (1) further comprises at least two vertically projecting posts (2);
the cage (3) further comprises at least two holes (7) on the top portion (11); and
the cage (3) is mounted onto the base plate (1) such that the posts (2) pass through the holes (7).

3. Holding template (100) according to claim 2, wherein collar clamps with screw knob (8) are provided, which are adapted to be fixed on the posts (2) above the holes (7).

4. Holding template (100) according to one of the claims 1 to 3, wherein the cage (3) has a curved form, wherein
a first curvature is at the transition (6a) from the side portions (6) to the top portion (11), and
optionally the top portion (11) has a second curvature.

5. Holding template (100) according to one of the claims 1 to 4, wherein the cage (3) is made of stainless steel, and the base plate (1) is made of polyethylene, polypropylene, polytetrafluoroethylene, other polymers, or any combination thereof.

6. Holding template (100) according to one of the claims 1 to 5, wherein
the slits (4) have a distance (d) to each other, which is in a range of about 3 mm to about 6 mm, preferably about 5 mm, and
the slits (4) have a width (w), which is in a range of about 0.5 mm to about 2 mm.

7. Holding template (100) according to one of the claims 1 to 6, comprising at least two fixtures (9), adapted to be inserted into two of the plurality of slits (4), in order to fix biospecimens from both sides.

8. Holding template (100) according to one of the claims 1 to 7, which further comprises a support tray (10), which is adapted to fit into the cage (3) onto the base plate (1), and which is preferably made of polyethylene, polypropylene, polytetrafluoroethylene or other polymers and a support plate (30) made of expanded polystyrene foam.

9. Holding template (100) according to one of the claims 1 to 8, wherein the top portion (11) comprises a vertical upper part (11a), into which the slits (4) extend, wherein the upper part (11a) of the top portion (11) is provided with a handle (14).

10. Holding template (100) according to claim 9, wherein each slit (4) comprises a broadening (12) at its end located in the upper part (11a) of the top portion (11), wherein
the plurality of broadenings (12) are offset to one another in respect to the extension direction of the slits (4).

11. High-precision slicer (113) for fresh large biospecimens (20) comprising a holding template (100) according to one of the claims 1 to 10, and a knife (13), wherein the knife (13) is designed to fit into the slits (4), to be guided by the slits (4) for slicing biospecimens (20), is longer than the distance between the side portions (6) of the cage (3), and has a preferred height of about 10 mm to 25 mm, more preferably about 18 mm.

## Amended claims

### Amended claims in accordance with Rule 137(2) EPC.

**1.** Holding template (100) for fresh large biospecimens (20), comprising a base plate (1) standing on a plurality of stilts (1b), the base plate (1) being provided with at least two parallel elongate openings (5);
a cage (3) comprising at least two opposite side portions (6) and a top portion (11), being removably mounted onto the base plate (1) such that the two side portions (6) are let into the elongate openings (5), and the cage (3) being adapted to hold a biospecimen (20) beneath, when mounted onto the base plate (1);
wherein the cage (3) is provided with a plurality of parallel slits (4), each extending along the side portions (6) and the top portion (11) wherein the cage (3) has a curved form,
wherein a first curvature is at the transition (6a) from the side portions (6) to the top portion (11), and
wherein the top portion (11) has a second curvature.

**2.** Holding template (100) according to claim 1, wherein
the transition (6a) has a convex curvature and the top portion (11) has a concave curvature.

**3.** Holding template (100) according to claim 1 or claim 2, wherein
the base plate (1) further comprises at least two vertically projecting posts (2); the cage (3) further comprises at least two holes (7) on the top portion (11); and the cage (3) is mounted onto the base plate (1) such that the posts (2) pass through the holes (7).

**4.** Holding template (100) according to claim 3, wherein collar clamps with screw knob (8) are provided, which are adapted to be fixed on the posts (2) above the holes (7).

**5.** Holding template (100) according to one of the claims 1 to 4, wherein the cage (3) is made of stainless steel, and the base plate (1) is made of polyethylene, polypropylene, polytetrafluoroethylene, other polymers, or any combination thereof.

**6.** Holding template (100) according to one of the claims 1 to 5, wherein
the slits (4) have a distance (d) to each other, which is in a range of about 3 mm to about 6 mm, preferably about 5 mm, and
the slits (4) have a width (w), which is in a range of about 0.5 mm to about 2 mm.

**7.** Holding template (100) according to one of the claims 1 to 6, comprising at least two fixtures (9), adapted to be inserted into two of the plurality of slits (4), in order to fix biospecimens from both sides.

**8.** Holding template (100) according to one of the claims 1 to 7, which further comprises a support tray (10), which is adapted to fit into the cage (3) onto the base plate (1), and which is preferably made of polyethylene, polypropylene, polytetrafluoroethylene or other polymers and a support plate (30) made of expanded polystyrene foam.

**9.** Holding template (100) according to one of the claims 1 to 8, wherein the top portion (11) comprises a vertical upper part (11a), into which the slits (4) extend,
wherein the upper part (11a) of the top portion (11) is provided with a handle (14).

**10.** Holding template (100) according to claim 9, wherein each slit (4) comprises a broadening (12) at its end located in the upper part (11a) of the top portion (11), wherein
the plurality of broadenings (12) are offset to one another in respect to the extension direction of the slits (4).

**11.** High-precision slicer (113) for fresh large biospecimens (20) comprising a holding template (100) according to one of the claims 1 to 10, and a knife (13), wherein the knife (13) is designed to fit into the slits (4), to be guided by the slits (4) for slicing biospecimens (20), is longer than the distance between the side portions (6) of the cage (3), and has a preferred height of about 10 mm to 25 mm, more preferably about 18 mm.

**12.** Method for cutting biospecimens, comprising the steps of:
- placing the biospecimen on a base plate (1) of a holding template (100) standing on a plurality of stilts (1b), the base plate (1) being provided with at least two parallel elongate openings (5);
- removably mounting a cage (3) of the holding template (100) comprising at least two opposite side portions (6) and a top portion (11) onto the base plate (1) such that the two side portions (6) are let into the elongate openings (5),
- securely holding in place the biospecimen (20) beneath the top portion (11) of the cage (3) when mounted onto the base plate (1);
- cutting the specimen with a knife (13) guided by a plurality of slits (4), each extending along the side portions (6) and the top portion (11).

**13.** Method according to claim 12, wherein the base plate (1) further comprises at least two vertically projecting posts (2); and the cage (3) further comprises at least two holes (7) on the top portion (11);
wherein the posts (2) pass through the holes (7) of the cage (3) when being removably mounted onto the base plate (1).
